Europäisches Patentamt

European Patent Office

Office européen des brevets

(11) Veröffentlichungsnummer : **0 080 227**
**B1**

(12) **EUROPÄISCHE PATENTSCHRIFT**

(45) Veröffentlichungstag der Patentschrift :
22.01.86

(51) Int. Cl.⁴ : **C 01 G 3/02**

(21) Anmeldenummer : **82201433.8**

(22) Anmeldetag : **12.11.82**

(54) **Verfahren zur Herstellung von Kupfer-II-hydroxid.**

(30) Priorität : **20.11.81 DE 3145995**

(43) Veröffentlichungstag der Anmeldung :
**01.06.83 Patentblatt 83/22**

(45) Bekanntmachung des Hinweises auf die Patenterteilung : **22.01.86 Patentblatt 86/04**

(84) Benannte Vertragsstaaten :
**AT BE CH DE FR GB IT LI LU NL**

(56) Entgegenhaltungen :
**DE-A- 1 592 256**
**FR-A- 1 501 119**
**US-A- 2 924 505**
**US-A- 3 628 920**

(73) Patentinhaber : **NORDDEUTSCHE AFFINERIE AG**
**Alsterterrasse 2**
**D-2000 Hamburg 36 (DE)**

(72) Erfinder : **Ploss, Hartmut, Dr.**
**Sierichstrasse 88**
**D-2000 Hamburg 60 (DE)**
Erfinder : **Lehne, Jürgen**
**Sievekingsallee 33**
**D-2000 Hamburg 26 (DE)**

(74) Vertreter : **Fischer, Ernst, Dr.**
**Reuterweg 14**
**D-6000 Frankfurt am Main 1 (DE)**

## Beschreibung

Die Erfindung betrifft ein Verfahren zur Herstellung von Kupfer-II-hydroxid aus Kupferoxychlorid durch Umsetzung mit basischen Stoffen.

Es ist bekannt, daß stabiles Kupfer-II-hydroxid nicht durch direkte Reaktion zwischen einem üblichen wasserlöslichen Kupfersalz — beispielsweise von Kupfersulfat und Natriumhydroxid — herstellbar ist. Es bildet sich dabei ein gelatinöser Niederschlag, der sich allmählich in schwarzes Kupfer-II-oxid umwandelt.

Man ist daher andere Wege zur Herstellung von Kupfer-II-hydroxid gegangen, wie die Behandlung von Kupferschrott in 3 %iger Ammoniaklösung durch Einblasen von Luft (US-A-2 536 096) oder die Behandlung von Kupfer-II-nitratlösungen mit konzentrierter Sodalösung bei 80 °C (DE-C-824 200). Hierbei werden jedoch Produkte erhalten, die nicht die erforderliche Stabilität aufweisen und sich insbesondere zu Kupferoxid umsetzen.

Andere bekannte Verfahren bestehen darin, zunächst äquimolare Mengen Kupfersulfat und Trinatriumphosphat zu Kupfernatriumphosphat (entsprechend $CuNaPO_4$) umzusetzen, um dann unter Zugabe einer hinreichenden Menge Natriumhydroxid das Kupfernatriumphosphat in Kupferhydroxid umzuwandeln (US-A 2 666 688 und US-E-24 324).

Die nach dem sogenannten « Phosphatverfahren » erzeugten Kupferhydroxide haben den Nachteil, daß die vielen veränderlichen Faktoren, wie Temperatur, Mengenverhältnisse und Konzentration, pH-Wert usw., ein Kupferhydroxid entstehen lassen, das in seiner Zusammensetzung und Eigenschaft stark variiert. Ein weiterer Nachteil dieser Verfahren ist der starke Anfall von Natriumsulfat, nämlich von 1 Mol Natriumsulfat pro Mol Kupferhydroxid.

Bei einem weiteren, auf elektrolytischem Wege arbeitenden Verfahren bringt man die Lösung eines aus der Kupferanode gebildeten Kupfersalzes im Kathodenraum mit dort vorhandenen oder gebildeten Hydroxylionen zusammen. Als Elektrolytlösung dient eine zusätzlich Natriumphosphat enthaltende Natriumsulfatlösung (DE-A-15 92 441). Infolge der erforderlichen Elektrolyseeinrichtungen ist dieses Verfahren vergleichsweise aufwendig.

Eine weitere Verfahrensart besteht darin, Kupfer-II-hydroxid aus Kupferoxychlorid (entsprechend $3 \cdot Cu(OH)_2 \cdot CuCl_2 \cdot XH_2O$), in dem das Kupfer-II-hydroxid bereits partiell vorgebildet ist, herzustellen. Dies geschieht durch Umsetzung mit basischen Substanzen, wie gebranntem Kalk, unter erhöhten Temperaturen (DE-C-306 035), gegebenenfalls auch erhöhtem Druck (DE-C-272 182), auch gefolgt von einer weiteren Auflösung des Kupfer-II-hydroxids mit Ammoniakwasser und erneuter Fällung (DE-C-461 556). Auch die so erhaltenen Endprodukte sind nicht von befriedigender Stabilität.

Aufgabe der Erfindung ist es, ein Verfahren zur Herstellung von Kupfer-II-hydroxid aus Kupferoxychlorid bereitzustellen, das einfach in der Durchführung und wenig aufwendig ist sowie zu einem stabilen, lagerfähigen Kupfer-II-hydroxid führt.

Die Aufgabe wird gelöst, indem das Verfahren der eingangs genannten Art entsprechend der Erfindung derart ausgestaltet wird, daß man vor der Umsetzung des in wäßriger Phase suspendierten Kupferoxychlorids mit Alkali und/ oder Erdalkalihydroxid Phosphationen zusetzt, die bei der Umsetzung erhaltene Kupfer-II-hydroxid-Ausfällung wäscht und das erneut suspendierte Kupfer-II-hydroxid mit saurem Phosphat unter Einstellung eines pH-Wertes von 7,5 bis 9 stabilisiert.

Im Unterschied zu den bekannten « Phosphatverfahren » erfolgt im erfindungsgemäßen Verfahren trotz Zugabe von Phosphationen keine chemische Umsetzung etwa zu Kupfernatriumphosphat, sondern die zugefügten Phosphationen haben lediglich eine stabilisierende Wirkung. Infolgedessen genügt es, wenn man entsprechend einer vorteilhaften Weiterbildung der Erfindung die Umsetzung des suspendierten Kupferoxychlorids in Gegenwart von mindestens 0,5 g/l, vorzugsweise von 1 bis 4 g/l, Phosphationen durchführt bzw. wenn man das erhaltene Kupfer-II-hydroxid mit mindestens 1 g/l, vorzugsweise 3 bis 6 g/l, Phosphationen stabilisiert.

Zur Einstellung des pH-Wertes von 7,5 bis 9 mittels Zugabe sauren Phosphates wird man üblicherweise Phosphorsäure verwenden. Es ist jedoch auch primäres Phosphat, z. B. primäres Natriumphosphat, geeignet.

Es ist zweckmäßig, für die Umsetzung des Kupferoxychlorids eine vergleichsweise hohe Suspensionsdichte einzustellen, da dadurch die Möglichkeit gegeben ist, die vom gebildeten Kupfer-II-hydroxid abgetrennte Prozeßlösung zusammen mit dem in nachfolgenden Schritten anfallenden Waschwasser ganz oder weitgehend in einem neuen Ansatz unterzubringen. Grenzen hinsichtlich der Suspensionsdichte sind durch eine zu hohe Konsistenz der Suspension und damit unzureichende Vermischung gesetzt.

In einer bevorzugten Ausgestaltung der Erfindung wird man für die Umsetzung den Kupferoxychlorid-Gehalt in der Suspension auf maximal 25 Gew.-%, vorzugsweise 10 bis 15 Gew.-%, einstellen.

Hierbei liegen bezüglich Anfall von Prozeßlösung bzw. -wasser und gründlicher Vermischbarkeit der Reaktionsteilnehmer günstigste Verhältnisse vor.

Eine weitere vorteilhafte Ausgestaltung der Erfindung besteht darin, die Umsetzung des Kupferoxychlorids bei max. 35 °C, vorzugsweise bei einer Temperatur im Bereich von 20 bis 25 °C, durchzuführen. Durch diese Maßnahme wird insbesondere vermieden, daß Anteile des Kupfer-II-hydroxids in Oxid übergehen.

Für die Umsetzung des Kupferoxychlorids ist Natronlauge besonders geeignet. Um eine quantitative Umsetzung zu gewährleisten, ist ein stöchiometrischer Überschuß erforderlich. Eine darüber hinausgehende zusätzliche Erhöhung des Überschusses beschleunigt zudem den Prozeß. Beispielsweise ist bei Zugabe der 4-fachen für die Umsetzung erforderlichen Menge Natronlauge die Reaktion in max. 20 Minuten abgeschlossen.

Als besonders geeignete Quelle für Kupferoxychlorid kann frisch hergestellte und gewaschene Kupferoxychlorid-Suspension eingesetzt werden.

Das nach dem erfindungsgemäßen Verfahren erhaltene Kupfer-II-hydroxid enthält 55 bis 62 Gew.-% Kupfer, besitzt eine Teilchengröße von 0,1 bis 5 µm und verändert sich in seiner physikalischen und chemischen Zusammensetzung selbst innerhalb mehrerer Jahre nicht. Es kann in Form einer Suspension, filterfeucht, aber auch als getrocknetes Pulver der Weiterverarbeitung zugeführt werden.

Das nach dem erfindungsgemäßen Verfahren erzeugte Kupfer-II-hydroxid ist insbesondere zur Herstellung anderer Kupferverbindungen, für die Weiterverarbeitung zu Kupferfarben und zur Formulierung von Pflanzenschutzpräparaten geeignet.

Die Erfindung wird anhand des nachfolgenden Beispiels beispielsweise und näher erläutert.

Beispiel

230 l Kupferoxychlorid-Suspension mit einem Feststoffgehalt von 570 g/l wurden mit 7,5 kg 20 Gew.-%iger Phosphorsäure in 250 l Wasser unter Rühren vermischt. Anschließend wurden unter Einhaltung einer Reaktionstemperatur von 22 °C 60 kg Ätznatron, das zuvor in 250 l Wasser gelöst worden war, schnell zugemischt, wobei eine dickflüssige Suspension erhalten wurde. Nach wenigen Minuten war die Reaktion abgeschlossen und die Prozeßlösung konnte abgetrennt werden.

Anschließend erfolgte eine zweifache Wäsche des erhaltenen Kupfer-II-hydroxids. Nach Beendigung der Wäsche wurde das Kupfer-II-hydroxid in Wasser suspendiert und mit ca. 11 kg 20 Gew.-%iger Phosphorsäure auf einen pH-Wert von 8 eingestellt.

Das gewonnene Kupfer-II-hydroxid wurde vom Suspendiermittel abgetrennt und gewaschen. Es konnte als Suspension oder zu Pulver getrocknet weiterverarbeitet werden.

Die im Verfahrensgang anfallenden Prozeßwässer konnten weitgehend in einem neuen Ansatz zur Herstellung von Kupfer-II-hydroxid eingesetzt werden.

**Patentansprüche**

1. Verfahren zur Herstellung von Kupfer-II-hydroxid aus Kupferoxychlorid durch Umsetzung mit basischen Stoffen, dadurch gekennzeichnet, daß man vor der Umsetzung des in wäßriger Phase suspendierten Kupferoxychlorids mit Alkali- und/oder Erdalkalihydroxid Phosphationen zusetzt, die bei der Umsetzung erhaltene Kupfer-II-hydroxid-Ausfällung wäscht und das erneut suspendierte Kupfer-II-hydroxid mit saurem Phosphat unter Einstellung eines pH-Wertes von 7,5 bis 9 stabilisiert.

2. Verfahren nach Anspruch 1, dadurch gekennzeichnet, daß man die Umsetzung des suspendierten Kupferoxychlorids in Gegenwart von mindestens 0,5 g/l, vorzugsweise 1 bis 4 g/l, Phosphationen durchführt.

3. Verfahren nach Anspruch 1 oder 2, dadurch gekennzeichnet, daß man das erhaltene Kupfer-II-hydroxid mit mindestens 1 g/l, vorzugsweise 3 bis 6 g/l, Phosphationen stabilisiert.

4. Verfahren nach Anspruch 1, 2 oder 3, dadurch gekennzeichnet, daß man für die Umsetzung den Kupferoxychlorid-Gehalt in der Suspension auf max. 25 Gew.-%, vorzugsweise 10 bis 15 Gew.-%, einstellt.

5. Verfahren nach einem oder mehreren der Ansprüche 1 bis 4, dadurch gekennzeichnet, daß man die Umsetzung des Kupferoxychlorids bei max. 35 °C, vorzugsweise bei einer Temperatur im Bereich von 20 bis 25 °C, durchführt.

6. Verfahren nach einem oder mehreren der Ansprüche 1 bis 5, dadurch gekennzeichnet, daß man die Umsetzung des Kupferoxychlorids mit Natronlauge durchführt.

**Claims**

1. A process of producing cupric hydroxide by a reaction of copper oxychloride with basic substances, characterized in that phosphate ions are added to a suspension of the copper oxychloride in an aqueous phase before the latter is reacted with alkali metal hydroxide and/or alkaline earth metal hydroxide and the cupric hydroxide which has been precipitated as a result of the reaction is washed and is again suspended and then stabilized by an addition of acid phosphate to adjust a pH value of 7.5 to 9.

2. A process according to claim 1, characterized in that the suspended copper oxychloride is reacted in the presence of phosphate ions in a quantity of at least 0.5 gram and preferably of 1 to 4 grams per liter of the suspension.

3. A process according to claim 1 or 2, characterized in that the resulting cupric hydroxide is stabilized with phosphate ions in a quantity of at least 1 gram and preferably 3 to 6 grams per liter of the suspension.

4. A process according to claim 1, 2 or 3, characterized in that the contents of copper oxychloride to be reacted in the suspension is adjusted to 25 % by weight, preferably 10 to 15 % by weight.

5. A process according to any of claims 1 to 4, characterized in that copper oxychloride is reacted at a temperature of up to 35 °C, preferably 20 to 25 °C.

6. A process according to any of claims 1 to 5, characterized in that copper oxychloride is reacted with sodium hydroxide solution.

## Revendications

1. Procédé de préparation de l'hydroxide de cuivre (II) à partir de l'oxychlorure de cuivre par réaction sur des substances basiques, caractérisé en ce qu'il consiste à ajouter, avant la réaction de l'oxychlorure de cuivre en suspension dans la phase aqueuse sur de l'hydroxyde de métal alcalin et/ou de métal alcalino-terreux, des ions phosphate, à laver le précipité d'hydroxyde de cuivre (II) obtenu lors de la réaction et à stabiliser l'hydroxyde de cuivre (II) remis en suspension par du phosphate acide en ajustant le pH à une valeur de 7,5 à 9.

2. Procédé suivant la revendication 1, caractérisé en ce qu'il consiste à effectuer la réaction de l'oxychlorure de cuivre en suspension en présence d'au moins 0,5 g/l et, de préférence de 1 à 4 g/l d'ions phosphate.

3. Procédé suivant la revendication 1 ou 2, caractérisé en ce qu'il consiste à stabiliser l'hydroxyde de cuivre (II) obtenu par au moins 1 g/l et, de préférence, 3 à 6 g/l d'ions phosphate.

4. Procédé suivant la revendication 1, 2 ou 3, caractérisé en ce qu'il consiste à régler pour la réaction la teneur en oxychlorure de cuivre dans la suspension à 25 % en poids au maximum et, de préférence, entre 10 et 15 % en poids.

5. Procédé suivant l'une ou plusieurs des revendications 1 à 4, caractérisé en ce qu'il consiste à effectuer la réaction de l'oxychlorure de cuivre à 35 °C au maximum, et, de préférence, à une température comprise entre 20 et 25 °C.

6. Procédé suivant l'une ou plusieurs des revendications 1 à 5, caractérisé en ce qu'il consiste à effectuer la réaction de l'oxychlorure de cuivre sur de la lessive de soude.